# EUROPEAN PATENT SPECIFICATION

(11) **EP 1 072 405 B1**
(45) Date of publication and mention of the grant of the patent: **04.06.2003**
(21) Application number: 00202692.0
(22) Date of filing: 27.07.2000
(51) Int. Cl.: B41C 1/10, B41M 5/36, C09D 7/12, C08K 5/098

(54) **Composition sensitive to IR radiation and to heat and lithographic plate coated therewith**
Infrarotstrahlungs- und wärme-empfindliche Zusammensetzung, und lithographische Druckplatte, die mit dieser Zusammensetzung beschichtet ist
Composition sensible aux rayons infrarouges et à la chaleur et plaque lithographique préparée avec cette composition

(30) Priority: 30.07.1999 EP 99830490
(43) Date of publication of application: 31.01.2001
(73) Proprietor: LASTRA S.P.A., I-25025 Manerbio (IT)
(72) Inventor: Bernardini, Roberto, 40065 Pianoro (IT); Tiefenthaler, Domenico, 25025 Manerbio (IT); Bolli, Angelo, 25025 Manerbio (IT)
(74) Representative: Marchi, Massimo

(56) References cited:
- EP-A- 0 823 327
- EP-A- 0 903 225
- WO-A-97/39894
- WO-A-99/21725
- US-A- 1 571 447
- US-A- 4 122 235
- US-A- 4 468 486
- US-A- 4 568 728

## Description

### FIELD OF INVENTION

The present invention relates to a composition sensitive to IR radiation and to heat, and a lithographic plate coated with this composition.

In particular, it relates to a composition sensitive to IR radiation and to heat which is useful for the production of a lithographic plate of the positive type.

It also relates to a composition sensitive to laser radiation which is useful for the production of a lithographic plate of the positive type.

### BACKGROUND OF INVENTION

As is well-known, the technique of printing by means of lithographic plates is based on differential partition between fatty substances and water. The fatty substance or ink is retained preferentially by the image area and the water is preferentially retained by the non-image area. When the surface of a lithographic plate, suitably prepared, is moistened with water and then sprinkled with ink, the non-image area retains the water and repels the ink, while the image area accepts the ink and repels the water. Then, the ink on the image area is transferred onto the surface of a material on which it is desired to reproduce the image, such as, for example, paper, textile and the like.

In general, the lithographic plates used in printing processes are formed from an aluminium support covered with a composition sensitive to light (photosensitive). When such a composition becomes soluble in an alkaline developing bath through the action of heat or of radiation of appropriate wavelength, the printing process is termed "positive". Conversely, when the portion exposed to heat or to radiation of appropriate wavelength becomes insoluble in an alkaline developing bath, the printing process is termed "negative". In both cases, the remaining, image area is lipophilic and hence accepts the ink, while the non-image area is hydrophilic and accepts the water.

The recent developments in the field of lithographic plates have been directed towards the search for compositions sensitive to laser light, preferably in the near IR. In particular, to laser light controlled by software, in such a way as directly to transfer the image created by computer onto the surface of the plate. This technique has the advantage of eliminating the photographic films, with consequent reduction in the pollution due to the chemical substances used for the preparation and production of these and elimination of all the problems that arise in the transfer of the image onto the plate via photographic films.

In the first place, a composition sensitive to radiation emitted by a laser could impart greater reliability to the system.

Secondly, it would be possible to work under ambient illumination, thus eliminating the automatic loading systems or the darkrooms.

With the aim of attaining this objective, in recent years many compositions comprising a polymeric binder and a solubility inhibitor have been investigated. Such a solubility inhibitor has the ability to render the polymeric binder insoluble in a suitable alkaline developing bath as long as it has not been exposed to a sufficient quantity of heat and of then rendering it soluble in the said developing bath after such exposure to heat. Besides the aforesaid components, many of the compositions described until now also comprise a so-called IR absorber, usually consisting of a compound capable of absorbing IR radiation and of transforming part of the radiation absorbed into heat, giving it up to the immediately surrounding environment.

### PRIOR ART

US-A-4 568 728 discloses a foundry binder for preparing shaped foundry products having improved breakdown when heated at 1000° F (about 538°C) for a number of minutes. This binder comprises (a) a resin component organic resin alkyd resins, furan resins, shell phenolic resins or acid setting phenolic resin and (b) a catalystic amount of a metal drier. In use, the foundry binder is mixed with sand to form sand shapes for foundry castings and cured (i.e. crosslinked) with a tertiary amine, particularly TEA, i.e. tryethylamine (col. 1, lines 14-15; col. 8, lines 25-32; col. 9, lines 67-68; col. 10, lines 59-60; claims 3 and 4). After introduction of molten metal into said sand shapes, the heat of the metal is transferred to the sand-binder mixture during the cooling step and causes destruction of the binder to a degree that allows the sand to be removed.

US-A-4 468 486 discloses and claims a resin coated sand for shell-molding operations comprising foundry aggregates coated with a phenolic resin and a carboxylic acid salt of an element selected from groups la, Ib, IIa, IIb, IIIa, IVa, Va, VIb, Vllb, or VIII of the Periodic Table of Elements, wherein the carboxylic acid salt is selected from formate, acetate, butyrate, benzoate, salicylate, fumarate, oxalate, acrylate, polyacrylate, methacrylate, polymethacrylate, adipate, lactate, citrate or succinate, and the ratio of carboxylic acid salt to phenolic resin is from about 0.5 to about 40 parts by weight to 100 parts phenolic resin.

EP-A-0 903 225 discloses is a light sensitive composition comprising (i) a compound capable of generating an acid on exposure of actinic light, (ii) one of a compound having a chemical bond capable of being decomposed by an acid and (iii) a compound having a group cross-linking by an acid, (iv) an infrared absorber, (v) a polymer obtained by polymerization of a polymerizable composition comprising an ethylenically unsaturated monomer having a solubility parameter (SP value) of 13 or more. Preferably, the compound capable of generating an acid on irradiation of an active light is a halogenated alkyl-containing triazines or a halogenated alkyl-containing oxadiazoles (page 9, line 43, to page 12, line 33).

US-A-4 122 235 relates to a resin binder composition comprising, in combination, a resole resin and a metal salt curing accelerator providing a binder composition that has an improved cure rate in electrical grade laminates without adversely affecting electrical properties.

US-A-1 571 447 relates to a molding composition containing resins, such as furfural resins, which exhibit sticking properties of a small quantity of a metallic soap such as zinc stearate or aluminium palmitate.

WO-A-99 21725 relates to a precursor, for example for a printing plate, that has a coating of a heat sensitive composition, the solubility of which in an aqueous developer is arranged to increase in heated areas. The composition contains a compound which increases the resistance of non-heated areas of the heat sensitive composition to dissolution in an aqueous developer, said compound being selected from the groups comprising: (A) compounds which include a poly(alkylene oxide) unit; (B) siloxanes; and (C) esters, ethers and amides of polyhydric alcohols.

WO-A-97 39894 relates to a lithographic base coated by a complex of a developer-insoluble phenolic resin and a compound which forms a thermally frangible complex with the phenolic resin. This complex is less soluble in the developer solution than the uncomplexed phenolic resin. However when this complex is imagewise heated the complex breaks down so allowing the non-complexed phenolic resin to the dissolved in the developing solution. Thus the solubility differential between the heated areas of the phenolic resin and the unheated areas is increased when the phenolic resin is complexed. Preferably a laser-radiation absorbing material is also present on the lithographic base. Examples of compounds which form a thermally frangible complex with the phenolic resin are quinolinium compounds, benzothiazolium compounds, pyridinium compounds and imidazoline compounds.

EP-A-0 823 327 relates to a positive photosensitive composition showing a difference in solubility in an alkali developer as between an exposed portion and a non-exposed portion, which comprises, as components inducing the difference in solubility, (a) a photo-thermal conversion material, and (b) a high molecular compound, of which the solubility in an alkali developer is changeable mainly by a change other than a chemical change.

### OBJECTS OF INVENTION

The present invention aims to provide a composition sensitive to heat and a lithographic plate of the positive type coated with the said composition wherein the solubility inhibitor consists of an organometallic compound.

The present invention also aims to provide a composition sensitive to IR radiation and a lithographic plate of the positive type coated with the said composition wherein the solubility inhibitor consists, of an organometallic compound.

The present invention further aims to provide a composition sensitive to laser radiation and a lithographic plate of the positive type coated with the said composition wherein the solubility inhibitor consists of an organometallic compound.

### DEFINITIONS

The term "metallocenes" is used to mean organometallic compounds, named also sandwich compounds, formed by two cyclopentadienyl groups bound to a metal atom.

The term "lithographic plate" means a support covered with a coating which, after being suitably exposed and developed, is used, as a planographic matrix, in printing processes wherein there is differential partition between fatty substances and water.

Typical examples of support materials are constituted by plates of aluminium, zinc, copper, polyester and paper covered with a polymer. Preferably, the support is a sheet of grained aluminium, oxidized and suitably treated to receive the photosensitive composition.

The term "positive type" means that the portion of the photosensitive coating exposed to the radiation or to heat becomes soluble in such a way that it can be removed during the process of development of the plate. Typically, the development process is performed in alkalis having a conductivity of from 75 to 110 mS.

The term "polymeric binder" means a polymer soluble in alkali, such as for example a novolac resin, a resol resin, a vinylphenolic resin, derivatives thereof or mixtures thereof.

Typically, a novolac resin is a polycondensation product obtained by reaction in an acidic environment between formaldehyde and phenol and/or m-cresol and/or symmetrical xylenol in a molecular ratio of less than 1 (for example formaldehyde : phenol = 1 : 2). Optionally, the thus obtained compound is variously modified such as, for example, by reaction with amides.

Typical examples of commercial novolac resins are the products LB 6564™ (mean ponderal molecular weight = 6000-10,000) and LB 744™ (mean ponderal molecular weight = 8000-13,000) from the firm BAKELITE (Germany); R 7100 (mean ponderal molecular weight = 8000-10,000) from the firm Rohner; PN 320™ (mean ponderal molecular weight = 3000-5000) and PN 430™ (mean ponderal molecular weight = 5000-9500) from the firm Clariant; 010/129/2 (mean ponderal molecular weight = 8700- 9700), 010/129/1 (mean ponderal molecular weight = 2200 - 3200), and 010/127/1 (mean ponderal molecular weight = 800 - 1800), 76/159 (mean ponderal molecular weight = 2900 - 3900), 76/160 (mean ponderal molecular weight = 2200- 3200), 76/190 (mean ponderal molecular weight = 7500 - 8500) from the firm Rohner.

The term "heat-sensitive composition" means a composition which includes a polymeric binder and has the property of being insoluble in an alkaline developing bath as long as it has not been exposed to a sufficient quantity of heat and of then being soluble in the said bath after such exposure to heat.

The term "solubility inhibitor" means a compound capable of rendering a heat-sensitive composition that contains it insoluble in a suitable alkaline developing bath as long as the said composition has not been exposed to a sufficient quantity of heat and/or laser radiation and of then-rendering it soluble in the said developing bath after such exposure to heat and/or laser radiation.

The term "IR absorber" means a compound capable of absorbing IR radiation and of transforming part of the absorbed radiation into heat and giving it up to the immediately surrounding environment. Preferably, such an absorber is soluble in water, ketones, glycols, glycolethers, alcohols, esters and mixtures thereof.

Typical examples of absorbers are the commercial products KF 646™, KF 645™, KF810™, KF 1003™, KF 1002™, IR HBB 812™, and KF 818™ from the company Riedel-de Haen/Allied/Signal (Seelze, Germany), the commercial product ADS 830A™ and ADS 1060A™, ADS793EI,™ ADS798MI™, ADS798MP™, ADS800AT™, ADS805PI™, ADS805PP™, ADS805PA™, ADS805PF™, ADS812M™, ADS815E™, ADS818H™, ADS518HT™, ADS822MT™, ADS838MT™, ADS840MT™, ADS845BI™ ADS905AM™, ADS956BGI™, ADS1040P™, ADS1054P™, ADS1050P™, ADS1120P™ from the firm American Dye Source (Varennes, Quebec, Canada), the commercial products YKR - 3070™, YKR - 3082™, D99-029™, and D99 - 039™ from the firm Yamamoto Chemical Inc., the commercial product Projet 825 LDI™ from the firm Avecia Limited (ex Zeneca Specialties, Manchester, England). Here, for convenience, the product Projet 825 will be referred to hereinbelow by the abbreviation "Z".

A particularly interesting family of absorbers is that characterized by the following structural formula: 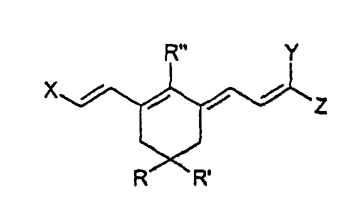 wherein X, Y, R, R' and R" can take many meanings. Typical examples of these meanings are: simple or condensed heterocyclic ring for X, simple or fused heterocyclic ring for Z and Y together with the carbon atom to which they are bound, hydrogen, C₁₋₃ alkyl, SO₃⁻ or COO⁻ for R and R' independently of one another and H or Cl for R".

Particular examples of the said heterocyclic rings are:

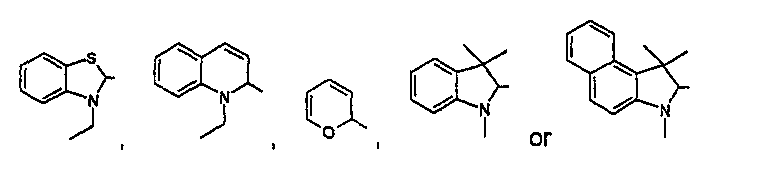

Specific examples of absorbers are:

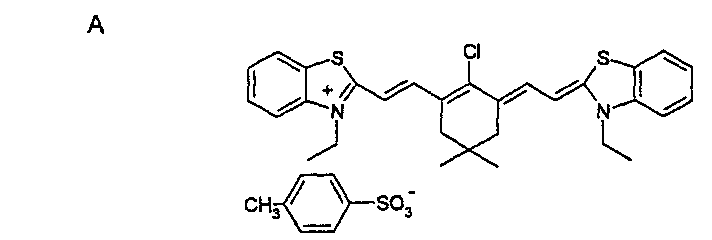

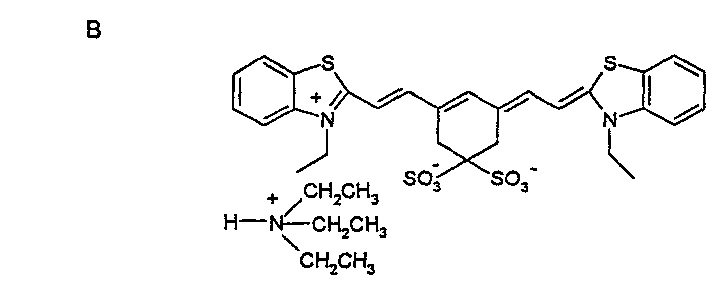

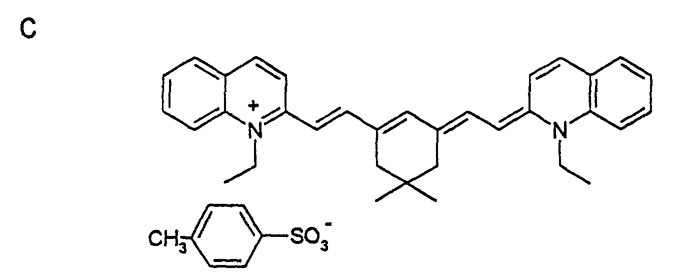

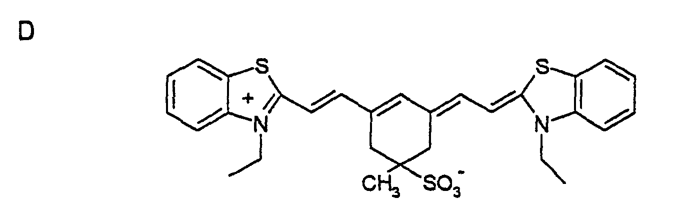

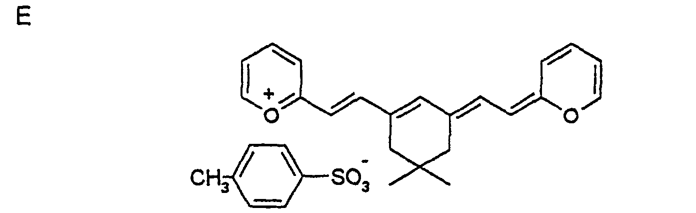

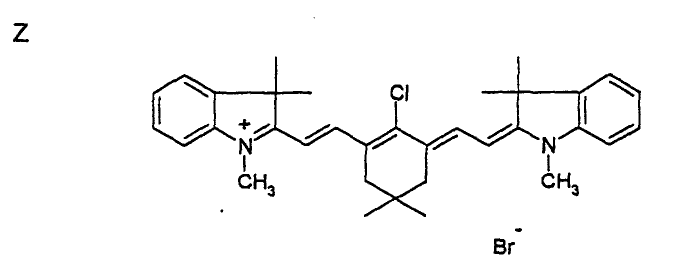

The term "IR radiation" means radiation of a wavelength of from of from 780 to 1400 nm.

A typical example of a device used to generate IR radiation is a laser diode which emits at ca. 830 nm.

The term "laser radiation" means radiation of a wavelength of from 600 to 1400 nm.

Absorber capable of absorbing radiation having a wavelength of from 600 to 780 nm are well known in the art. Typical examples of such absorbers are the commercial products ADS640PP™, AD640HI, ™ ADS640HI™, ADS675MT™, ADS680BR™, ADS740PP™, ADS745HT™, ADS760MP™, ADS775MI™, ADS775MP™, ADS775HI™, ADS775PI™, ADS775PP™, ADS780MT™ and ADS780BP™ from the firm American Dye Source (Varennes, Quebec, Canada).

The term "nominal wavelength" means a wavelength of from 805 to 830 nm.

The term "dye" means a coloured compound or preparation capable of dyeing the photosensitive composition in order to reveal the image after the exposure to light and/or after development.

Typical examples of dyes are Basonyl™ blue 636 (Colour Index 42595) from the firm Basf (Germany), Sudan Yellow 150 (Colour Index 11021) from the firm Basf (Germany), Solvent Green 3 (Colour Index 61565), Solvent Blue 59 (Colour Index 61552), Solvent Blue 35 (Colour Index 61554) or mixtures thereof.

The term "triazine" intends to mean the entire family of the substituted trichloromethyl-s-triazines of known type.

The term "additive" means a compound used to improve or confer a desired property on the photosensitive composition such as for example an enhancer developing agent, a pigment, a plasticizer capable of rendering the emulsion less resistant to heat and hence more sensitive, without however having an insolubilizing function, or an agent capable of modifying the surface and/or interfacial tension and thus improving the spreadability characteristics on the support and the covering power of the heat-sensitive composition.

Typical examples of pigments are: Heliogen™ Blue L 6700 F (PB 15:6 colour index 74160), Heliogen™ Blue L 6875 F (PB 15:2 colour index 74160) from the firm Basf (Germany), and from the Waxoline™ series: BLUE AP FW™ (colour index SB 36 PART 2 61551), VIOLET A FW™ (colour index SV 13 PART 2 60725), GREEN G Fw™ A (colour index SB 3 PART 2 61565™) from the firm Avecia Limited (ex Zeneca Ltd.) or mixtures thereof.

Typical examples of agents capable of modifying the surface and/or interfacial tension are the copolymers dmethylpolysiioxane-modified polyethers, mixtures of high-boiling aromatic solvents, ketones and esters and fluorinated surfactants. Typical examples of such agents are the commercial products BYK 300™, 302™ and 341™, BYKETOL™ OK from the firm BYK Mallinckrodt and FC 430™ and FC 431™ from the firm 3M.

### SUMMARY INVENTION

In a first aspect, the present invention relates to a laser sensitive composition of the positive type according to claim 1.

In a second aspect, the present invention also relates to a lithographic plate of the positive type according to claims 18 and 29.

Typically, the metal of group IIIA is aluminium and boron and of the transition group is titanium(IV), iron(III), copper(II), chromium(III), cobalt(II), manganese(II), tungsten(IV), vanadium, zinc and zirconium.

The preferred metals are titanium(IV), copper(II) and iron.

Depending on the number of valences of the above mentioned metals the said organometallic compounds preferably comprises at least 1 organic moiety selected from the group comprising aliphatic groups having from 1 to 10 C atoms and cycloaliphatic groups having from 3 to 6 C atoms.

Still preferably the said aliphatic group is an alkyl, alkoxyl or alkylcarboxyl group having from 1 to 10 C atoms.

Typical examples of aluminium organic compounds are aluminium acetate, aluminium acetilacetonate, aluminium isopropoxide, aluminium tri-sec-butoxide, diethyl aluminium chloride, diethyl aluminium ethoxide, diisobutyl aluminium hydride and triisobutyl aluminium.

Typical examples of boron organic compounds are triisopropyl borate, tributyl borate, triethyl borane, triethyl borate, bromodimetyl borane, triphenyl borane, B-methoxy diisopino camphenyl borane, DIP-chloride, B-chloro diisopino camphenyl borane, B-bromocathecol borane, 2-bromo-1,3,2-benzodioxaborole and bromo dimethyl borane.

Typical examples of titanium(IV) organic compounds are titanium(IV) isopropoxide (tetraisopropyl orthotitanate), titanium(IV) propoxide (tetrapropyl orthotitanate), titanium(IV) butoxide (tetrabutyl titanate), titanium(IV) ethoxide (tetraethyl orthotitanate), titanium(IV) 2-ethylhexoxide (tetrakis (2-ethylhexyl) orthotitanate), titanium(IV) methoxide (tetramethyl orthotitanate), titanium diisopropoxide bis(acetylacetonato) and titanium(IV) (triethanolaminato).

Examples of commercial organic compounds of titanium(IV) are Tyzor™ TE, Tyzor™ 131, Tyzor™ GBA, Tyzor™ TPT, Tyzor™ TBT, Tyzor™ TOT and Tyzor™ AA.

Typical examples of organic complexes of an inorganic salt of titanium(lV) are titanium tetrachloride tetrahydrofuran and tetrachlorobis (tetrahydrofuran) titanium.

Typical examples of copper(II) organic compounds are copper(II) d-gluconate, copper(II) acetate monohydrate, copper(II) acetate hydrate, copper(II) acetylacetonate, copper(II) 2-ethylhexanoate, copper(II) cyclohexanebutyrate, 2,4 pentanedione copper(II) derivates, copper(II) acetate and copper(II) methoxide.

Typical examples of iron organic compounds are iron(II) d-gluconate dihydrate, iron(III) acetylacetonate, 2,4 pentanedione iron(III) derivatives and iron(II) acetate.

Typical examples of zinc organic compounds are zinc acetylacetonate, zinc acetylacetonate hydrate, zinc acetate, zinc acetate dihydrate, diethylzinc, dimethyl zinc, diphenyl zinc, dichloro-(N,N,N',N')-tetramethylene-diamino zinc, zinc bis (2,2,6,6-tetramethyl-3,5-heptanedionate), zinc cyclohexanebutyrate and 3,5-di-tert-butylsalicylic acid zinc salt.

Typical examples of manganese organic compounds are manganese acetate, manganese acetate dihydrate, manganese acetate tetra hydrate, manganese acetylacetonate and manganese cyclohexanebutyrate.

Typical examples of zirconium organic compounds are zirconium(IV) butoxide (tetrabutyl zirconate), zirconium tert-butoxide (tetra (ter-butyl) zirconate), zirconium ethoxide (tetraethyl zirconate), zirconium propoxide (tetrapropyl zirconate), zirconium(IV) isopropoxide isopropanol complex, zirconium acetate, zirconium acetate hydroxyde, zirconium(IV) acetylacetonate and 2,4 pentanedione zirconium(IV) derivatives.

Typical examples of vanadium organic compounds are vanadyl isopropoxide, vanadyl acetylacetonate and vanadium(III) acetylacetonate.

Preferably, the said polymeric binder comprises a novolac resin or a derivative thereof having a mean ponderal molecular weight of from 2000 to 14,000.

Advantageously, the said polymeric binder is a mixture of two or more novolacs. Preferably, a first novolac has a mean ponderal molecular weight of from 3000 to 5000 and a second novolac has a mean ponderal molecular weight of from 6000 to 10,000.

In a first preferred embodiment of the present invention, the composition also comprises an IR absorber capable of absorbing IR radiation of from 780 to 1400 nm, preferably from 780 to 1100 nm, and of converting it into heat.

The composition of the present invention can also comprise a dye.

Typically the said dye is Basonyl™ blue 636 (Colour Index 42595) and is present in quantities sufficient only to dye the composition.

The composition of the present invention can also comprise a plasticizer, a triazine and other additives of a standard nature. In particular, the plasticizer has the purpose of modifying the toughness and the hardness of the said composition by varying its sensitivity to heat without appreciably affecting its sensitivity to the developers.

Advantageously, the composition of the present invention can also contain solubility inhibitors belonging to other classes such as, for example, a hydroxylated acrylic copolymer or a derivative thereof wherein some hydroxyl groups have been esterified with an aliphatic carboxylic acid or a reactive derivative thereof. Such further heat-sensitive solubility inhibitors are the subject of another patent application, which is included here by reference, filed on the same date by the Applicant. Typically, the said hydroxylated acrylic copolymers are Macrynal™ SM 510 N, SM 513, SM 515 or SM 516 from the firm Hoechst or a derivative thereof obtained by partial esterification with maleic anhydride.

The present invention is further described by the following Examples and Tests, which are solely for illustrative purposes and must not be considered to limit the invention.

### EXPERIMENTS

### EXAMPLE 1

### Preparation of compositions sensitive to heat and to IR radiation

The mixture (6 g) of the components indicated in the following Tables was dissolved at ambient temperature (ca. 25°C) in 94 g of a 30 : 70 (w/w) acetone : methoxypropanol mixture, stirring until complete dissolution of the components.

The solution obtained was filtered through paper using a filter of the 0860 type from the firm Schleicher & Schuell (100 mm).

**Table 1**

| Composition No. | 1 | 2 | 3 | 4 | 5 | 6 |
|---|---|---|---|---|---|---|
| Component | % (w/w) | % (w/w) | % (w/w) | % (w/w) | % (w/w) | % (w/w) |
| R7100™ | 46.9 | 50.4 | 53.9 | 57.4 | 20.1 | 67 |
| PN 320™ | 20.1 | 21.6 | 23.1 | 24.6 | 46.9 | 0 |
| Tyzor™ TE (*) | 30 | 25 | 20 | 15 | 30 | 30 |
| "Z" | 3 | 3 | 3 | 3 | 3 | 3 |

| | | | | | | |
|---|---|---|---|---|---|---|
| (*) triethanolaminated titanium isopropoxide | | | | | | |

**Table 2**

| Composition No. | 7 | 8 | 9 | 10 | 11 |
|---|---|---|---|---|---|
| Component | % (w/w) | % (w/w) | % (w/w) | % (w/w) | % (w/w) |
| LB6564™ | 67 | 60.3 | 53.6 | 46.9 | 72 |
| PN320™ | 0 | 6.7 | 13.4 | 20.1 | 0 |
| Tyzor™ TE (*) | 30 | 30 | 30 | 30 | 25 |
| "Z" | 3 | 3 | 3 | 3 | 3 |

**Table 3**

| Composition No. | 12 | 13 | 14 |
|---|---|---|---|
| Component | % (w/w) | % (w/w) | % (w/w) |
| R7100™ | 39.9 | 46.9 | 53.9 |
| PN 320™ | 17.1 | 20.1 | 23.1 |
| Macrynal™ SM 510 N | 10 | 10 | 10 |
| TYZOR™ TE | 30 | 20 | 10 |
| "Z" | 3 | 3 | 3 |

**Table 4**

| Composition No. | 15 | 16 | 17 |
|---|---|---|---|
| Component | % (w/w) | % (w/w) | % (w/w) |
| R7100™ | 39.9 | 46.9 | 53.9 |
| PN 320™ | 17.1 | 20.1 | 23.1 |
| Modified Macrynal™ (*) | 10 | 10 | 10 |
| Tyzor™ TE | 30 | 20 | 10 |
| "Z" | 3 | 3 | 3 |

**Table 5**

| Composition No. | 18 | Composition No. | 19 |
|---|---|---|---|
| Component | % (w/w). | Component | % (w/w) |
| R7100™ | 44.8 | R7100 | 58.3 |
| PN320™ | 22.2 | PN320 | 24.9 |
| Tyzor™ TE | 30 | Ti (IV) butoxide | 13.7 |
| ADS 1060™ | 3 | "Z" | 3 |

**Table 6**

| Composition No. | 20 | Composition No. | 21 |
|---|---|---|---|
| Component | % (w/w) | Component | % (w/w) |
| R7100™ | 53.9 | R7100 | 58.8 |
| PN320™ | 23.1 | PN320 | 25.2 |
| Ti(IV) ethylhexoxide | 20 | Ti (IV) propoxide | 13 |
| "Z" | 3 | "Z" | 3 |

**Table 7**

| Composition No. | 22 | Composition No. | 23 |
|---|---|---|---|
| Component | % (w/w) | Component | % (w/w) |
| R7100™ | 46.2 | LB6564 | 88 |
| PN320™ | 30.8 | Basonyl Blu 636 | 1 |
| Ti(IV)isopropoxide | 20 | Ti(IV) isopropoxide | 8 |
| "Z" | 3 | "Z" | 3 |

**Table 8**

| Composition No. | 24 | Composition No. | 25 |
|---|---|---|---|
| Component | % (w/w) | Component | % (w/w) |
| R7100™ | 62.3 | LB6564 | 88 |
| PN320™ | 26.7 | Ti(IV) isopropoxide | 8 |
| Ti(IV)isopropoxide | 7 | Basonyl Blu 636 | 1 |
| Basonyl™ Blu 636 | 1 | "Z" | 3 |
| ADS 830™ | 3 | | |

The above mixtures of Tables 1-8 are completely soluble also in the following solvents: methylketone [MEK]; acetone/MEK (5/95 to 95/5 w/w); MEK/2-methoxyisopropanol (5/95 to 95/5 w/w); acetone/isopropylalcohol [IPA] (5/95 to 95/5 w/w); MEK/IPA (5195 to 95/5 w/w). (*) The modified Macrynal™ was prepared as follows:

### Reagents

| | |
|---|---|
| Macrynal™ SM 510 N ⁽¹⁾ | 32.0 kg (75.24 % w/w) |
| [⁽¹⁾ Macrynal™ SM 510 N has an OH number of about 160] | |
| Maleic anhydride | 2.4 kg (5.64 % w/w) |
| Hydroquinone | 22.5 g (0.053 % w/w) |
| Triethylamine | 108 g (0.25 % w/w) |
| Butyl acetate | 8.0 kg (18.81 % w/w) |

### Method

Hydroquinone was placed in a 50 l top-loading glass reactor equipped with a mechanical stirrer of 0.45-0.5 kW power with rotating teflon paddle, a 3 l dropping funnel and a reflux condenser. This reactor was also equipped with a heating mantle with double thermocouple control: one placed at the base of the reactor and the other at the top of the heating mantle.

When the addition was complete, the stirrer and the resistors were switched on, setting the heating effect of the first to 78°C and that of the second to 80°C.

The maleic anhydride was dissolved separately in half of the volume of butyl acetate with heating (50°C) and stirring, prolonged contact with the air being avoided so as to avoid the moisture contained therein transforming the anhydride to the acid.

When the reactor temperature reached 80°C, the maleic anhydride solution was added over a period of 15 minutes.

The container that had contained the maleic anhydride solution was washed with a portion of the remaining butyl acetate.

Separately, a solution containing the triethylamine and the remaining butyl acetate was prepared, and it was added slowly to the reaction mixture over a period of ca. 1 hour.

When the addition was complete, the temperature of the first resistor was reset to 88°C and that of the second resistor to 90°C.

The reaction mixture was allowed to react for 5 hours at 90°C. Then the heating resistors were switched off and the reaction mixture was allowed to cool with stirring.

The product thus obtained could be used as such to prepare the composition of the present invention and was mainly composed of the desired esterification product (50-60 % w/w) and of butyl acetate (40-50 % w/w).

The desired esterification product had the following characteristics:

| | |
|---|---|
| Acidity No. | 75 ± 10 mg KOH/g |
| Viscosity (with cup No.3*) | 200 |

| | |
|---|---|
| (*) The viscosity was measured by the FORD cup method at 25°C. | |

### EXAMPLE 2

### Preparation of a lithographic plate of the positive type

The compositions of the previous Example 1 were spread on an aluminium support which had previously been treated by standard techniques. The plate thus coated was dried in a forced circulation oven such as the PID™ system M80-VF™ from the firm MPM™ Instruments s.r.l. (Bemareggio, Milan, Italy) at 90°C for 8 minutes. The weight of the photosensitive coating is 1.5-2.0 g/cm².

After being allowed to stand for at least 24 hours, the plates thus obtained were subjected to the following Tests.

### TEST 1

### Resistance to a 10% solution of sodium metasilicate pentahvdrate in demineralized water

A 2 x 30 cm strip of plate was immersed in successive "steps" of 4 cm/10 sec in a graduated cylinder containing the 10% sodium metasilicate pentahydrate solution at the temperature of 24°C.

In this way, a scale made up of six zones with immersion times of 10 secs for the 1^{st} step of the scale up to one minute for the last was obtained. The results are shown in Table 9 below.

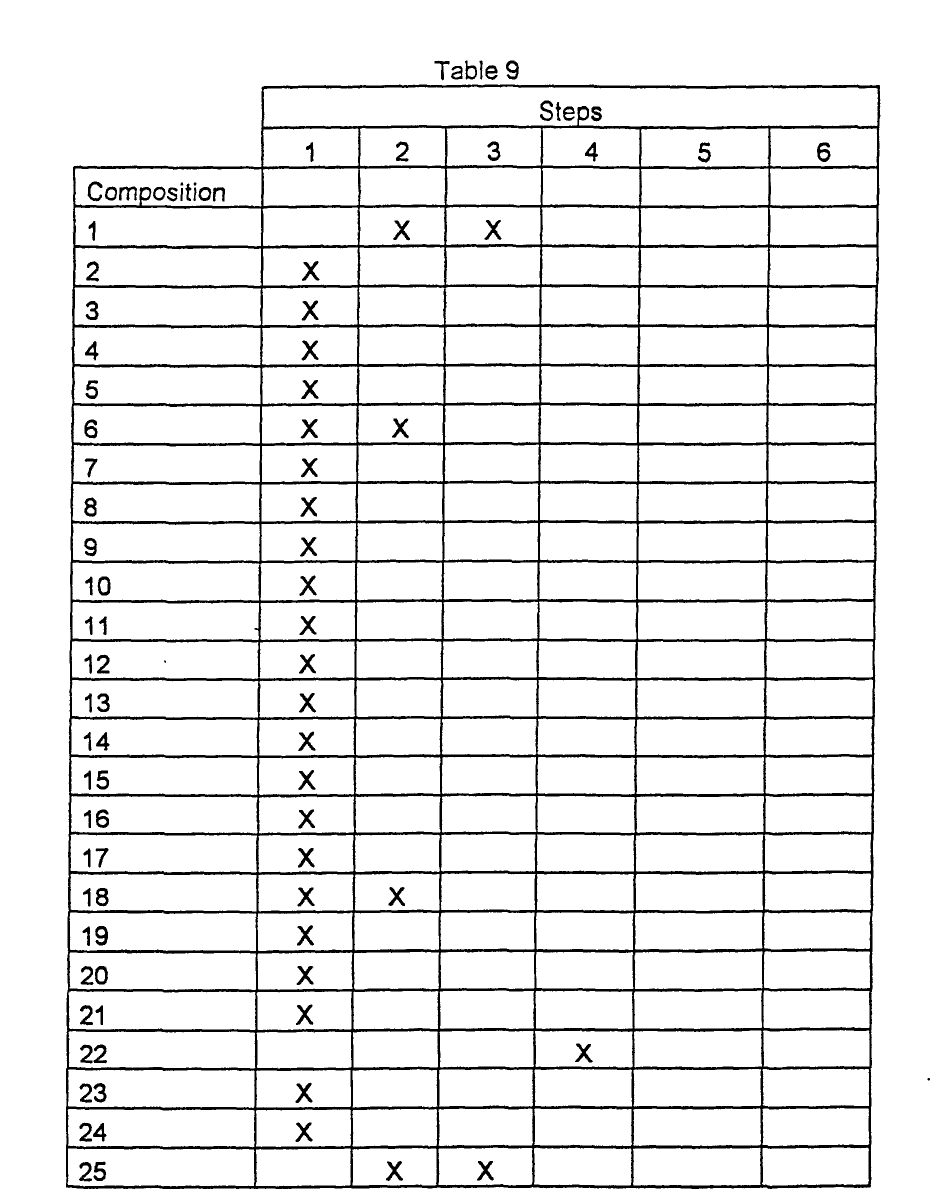

The values indicate the first step visible independently of the thickness of the remaining coating; the value 1 is equivalent to a time of 10 seconds and the value 6 is equivalent to a time of 60 seconds.

The resistance of the composition to the solution used is highest for the value 6 and lowest or zero resistance for the value 1.

### TEST 2

### Resistance to the developer LAP98™

A 2 x 30 cm strip of plate was immersed in successive "steps" of 4 cm/10 sec in a graduated cylinder containing a solution of LAP98™ at the temperature of 24°C.

The LAP98™ had the following composition: water (85% w/w), sodium metasilicate pentahydrate (13% w/w), surfactants (0.5% w/w) and other additives (1.5% w/w).

In this way, a scale made up of six zones with immersion times of 10 secs for the 1^{st} step of the scale up to one minute for the last was obtained. The results are shown in Table 10 below.

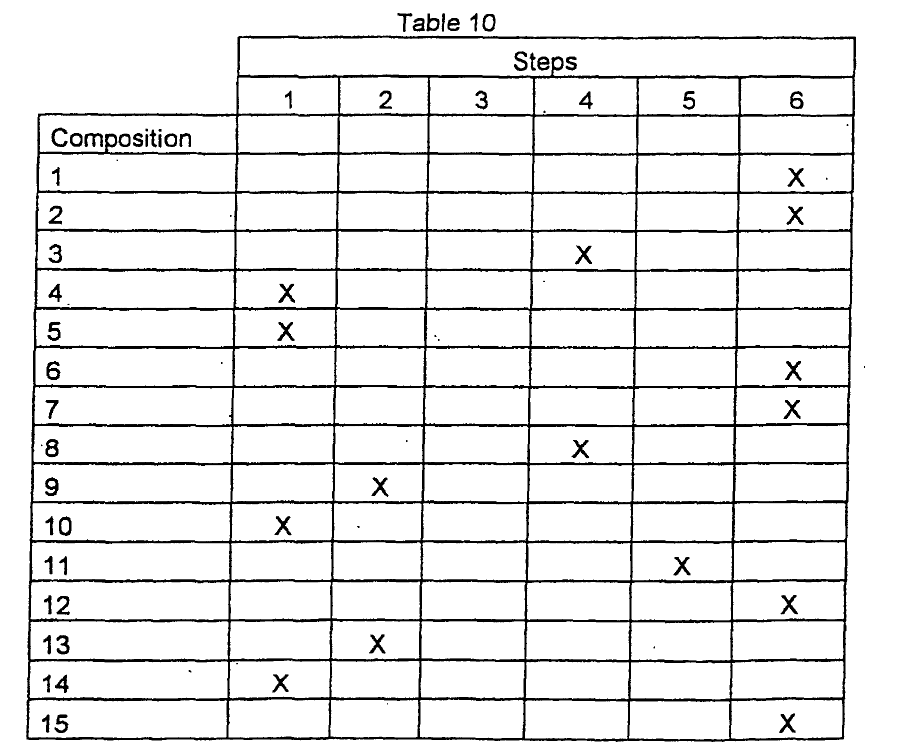

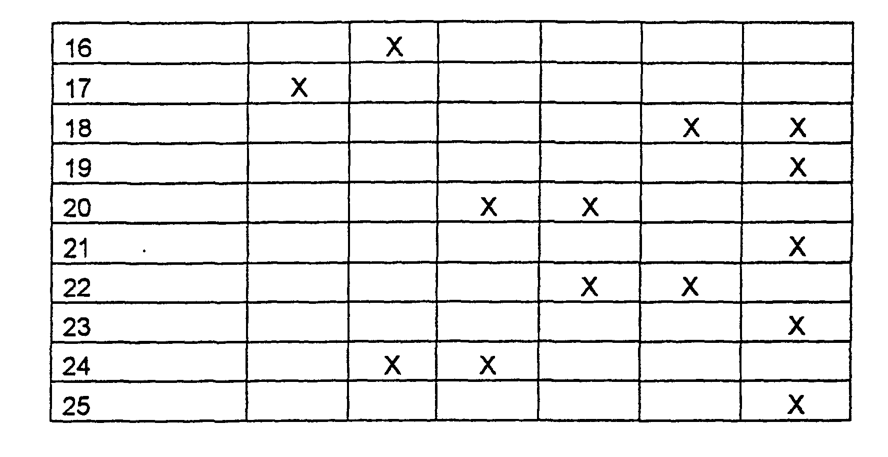

The values indicate the first step visible independently of the thickness of the remaining coating; the value 1 is equivalent to a time of 10 seconds and the value 6 is equivalent to a time of 60 seconds.

The resistance of the composition to the solution used is highest for the value 6 and lowest or zero resistance for the value 1.

### TEST 3

### Resistance to isopropyl alcohol

A 2 x 30 cm strip of plate was immersed in successive "steps" of 4 cm/10 sec in a graduated cylinder containing a 40% aqueous solution of isopropyl alcohol at a temperature of 24°C.

In this way, a scale made up of six zones with immersion times of 1 minute for the 1^{st} step of the scale up to 6 minutes for the last was obtained. After the immersion, onto the surface of each strip was applied an adhesive band, which was immediately removed by pulling, in order to evaluate the degree of deterioration of photosensitive layer caused by the solution of isopropyl alcohol. The results are shown in Table 11 below.

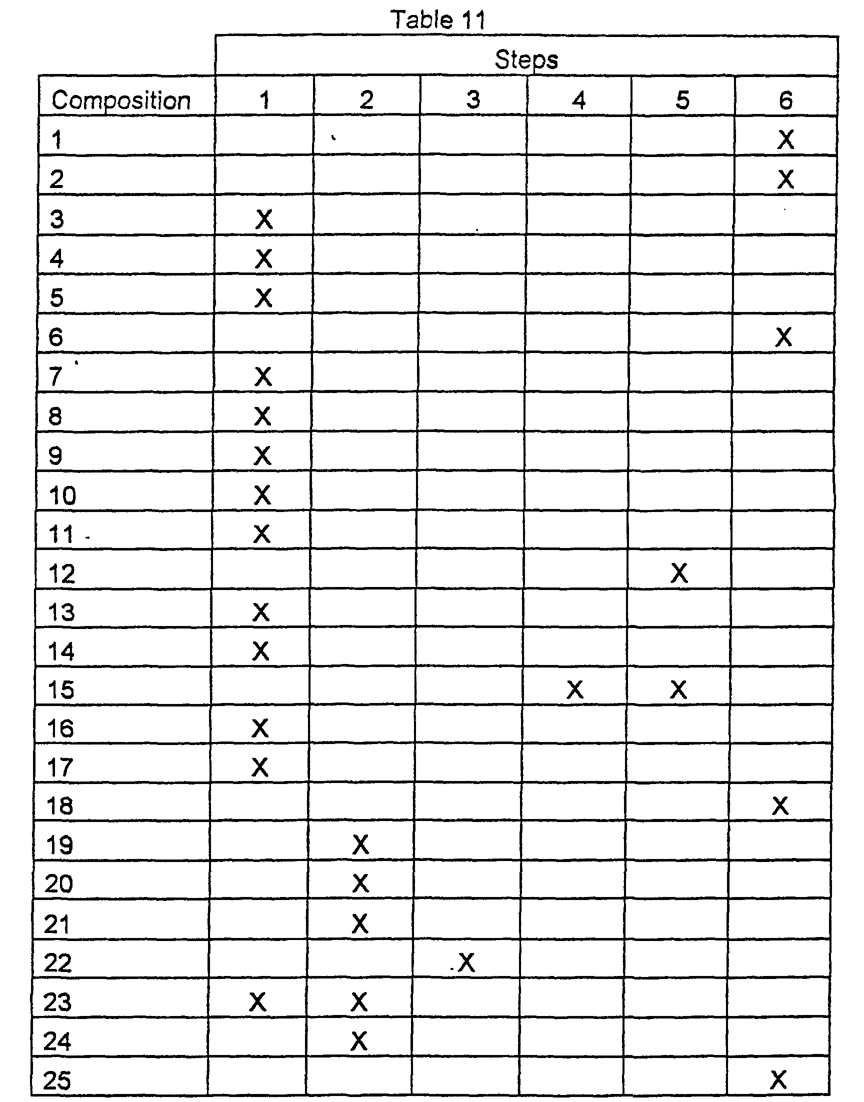

The values indicate the first step visible independently of the thickness of the remaining coating; the value 1 is equivalent to a time of 1 minute and the value 6 is equivalent to a time of 6 minutes. The resistance of the composition to the solution used is highest for the value 6 and lowest or zero resistance for the value 1.

### TEST 4

### Exposure to IR radiation

Six different zones of a plate having the same weight distribution per unit area were exposed using a laser beam, controlled by software and having a nominal wavelength 830 nm (all composition except for composition No. 18) and nominal wavelength 1060 nm (composition No. 18 only), at the following energy values/cm²: 300 mJ/cm², 250 mJ/cm², 150 mJ/cm², 100 mJ/cm², 75 mJ/cm² and 50 mJ/cm².

The exposed plates were immediately developed in a tray using, as reference, LAP98™ from the firm Lastra S.p.A. as developer at a temperature of from 24 to 25°C for 45 seconds of immersion time with stirring plus 15 seconds of wiping with a cotton pad.

The results of the test are shown in Table 12 and 12bis.

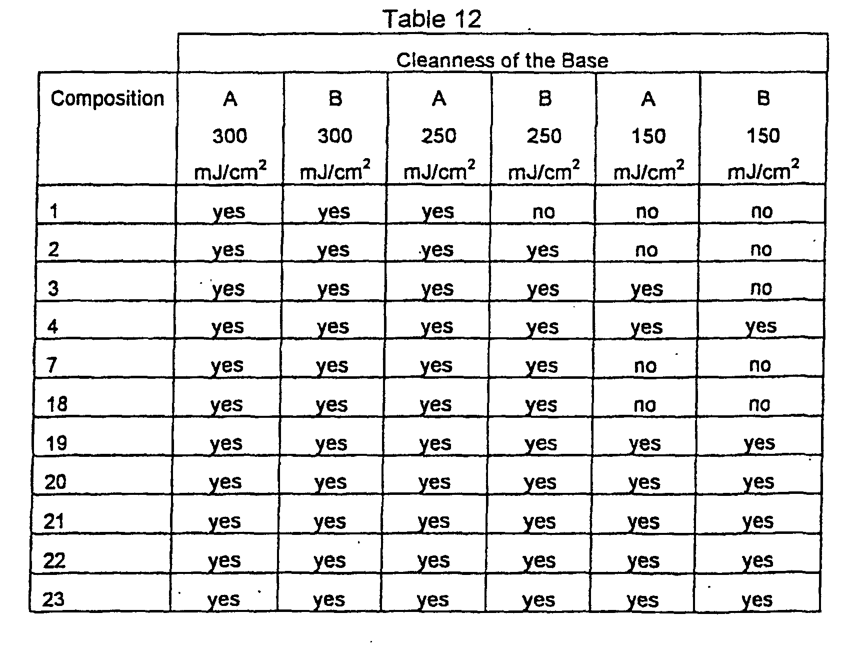

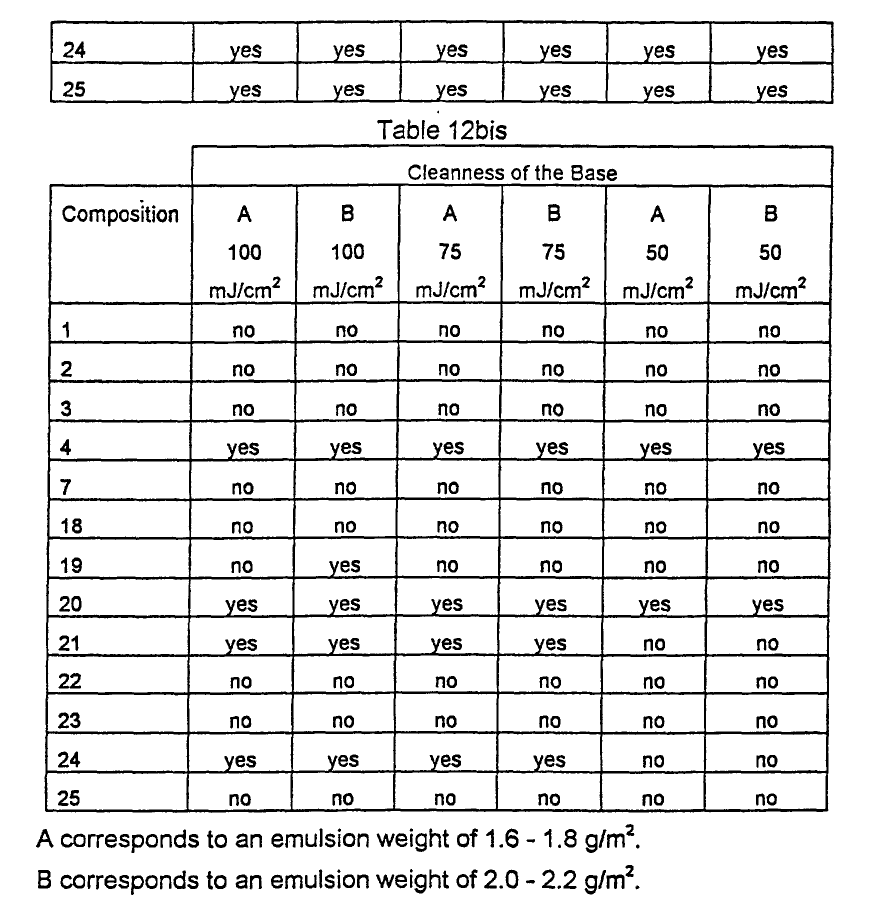

The term "cleanness of the base" is used to mean that the developer has removed the composition from the regions that have been exposed to laser radiations.

### TEST 5

### Resistance to mechanical abrasion

To simulate the mechanical and chemical abrasion which a plate undergoes during the printing cycle, samples of plates corresponding to the compositions from 1-4 and 7, 18-25 were fixed to a level surface and placed in close contact with a cotton pad soaked in a 50% solution of isopropyl alcohol. The pad was moved by an arm attached to a compressed air system capable of imparting an oscillatory motion with consequent rubbing of the samples under examination. For each composition, the maximum number of passes before the complete removal of the emulsion was recorded. The results expressed in number of passes are reproduced in the following Table 13.

**Table 13**

| Composition | Number of Passes |
|---|---|
| 1 | 100 |
| 2 | 30 |
| 3 | 15 |
| 4 | 5 |
| 7 | 30 |
| 18 | 100 |
| 19 | 70 |
| 20 | 20 |
| 21 | 90 |
| 22 | 100 |
| 23 | 60 |
| 24 | 95 |
| 25 | 600 |

## Claims

1. A laser-sensitive composition of the positive type comprising a polymeric binder, a IR absorber and a solubility inhibitor capable of rendering the composition insoluble in an alkaline developing bath before exposure to IR radiation and soluble in said alkaline developing bath after exposure to IR radiation, **characterized in that** the said solubility inhibitor is a organometallic compound, an organic salt or an organic complex of an inorganic salt of a metal selected from the group consisting of boron, titanium(IV), tungsten(IV) and vanadium provided however that said solubility inhibitor is not a metallocene.

2. A composition according to claim 1, **characterized in that** the said organometallic compound comprises at least 1 organic moiety selected from the group comprising aliphatic groups having from 1 to 10 C atoms and cycloaliphatic groups having from 3 to 6 C atoms.

3. A composition according to Claim 2, **characterized in that** the said aliphatic group is an alkyl, alkoxyl or alkylcarboxyl group having from 1 to 10 C atoms.

4. A composition according to any of the preceding claims 1 to 3, **characterized in that** the organic compound of titanium(IV) is selected from the group comprising titanium(IV) isopropoxide, titanium(IV) propoxide, titanium(IV) butoxide, titanium(IV) ethoxide, titanium(IV) 2-ethylhexoxide, titanium(IV) methoxide, titanium diisopropoxide bis(acetylacetonato) and titanium(IV) (triethanolaminato).

5. A composition according to any of the preceding claims 1 to 4, **characterized in that** the organic complex of an inorganic salt of titanium(IV) is the complex of titanium tetrachloride with tetrahydrofuran or tetrachlorobis (tetrahydrofuran) titanium.

6. A composition according to any of the preceding claims 1 to 3, **characterized in that** the organic compounds of boron are selected from the group comprising triisopropyl borate, tributyl borate, triethyl borane, triethyl borate, bromodimetyl borane, triphenyl borane, B-methoxy diisopino camphenyl borane, DIP-chloride, B-chloro diisopino camphenyl borane, B-bromocathecol borane, 2-bromo-1,3,2-benzodioxaborole and bromo dimethyl borane.

7. A composition according to any of the preceding claims 1 to 3, **characterized in that** the organic compounds of vanadium are selected from the group comprising vanadyl isopropoxide, vanadyl acetylacetonate and vanadium(III) acetylacetonate.

8. A composition according to any one of Claims 1 to 7, **characterized in that** the said polymeric binder comprises a novolac resin.

9. A composition according to any one of Claims 1 to 8, **characterized in that** the IR absorber is capable of absorbing IR radiation of from 780 to 1400 nm.

10. A composition according to any one of Claims 1 to 9, **characterized in that** in comprises also a solubility inhibitor which is a hydroxylated acrylic copolymer or a derivative thereof wherein some hydroxyl groups have been esterified with a carboxylic acid or a reactive derivative thereof.

11. A lithographic plate of the positive type coated with a heat-sensitive composition comprising a polymeric binder and a solubility inhibitor, **characterized in that** the said solubility inhibitor is a organometallic compound, an organic salt or an organic complex of an inorganic salt of a metal of the group IIIA or transition group of the periodic chart of the elements, provided however that solubility inhibitor is not a metallocene and that the composition does not comprise a compound capable of generating an acid on exposure of actinic light.

12. A lithographic plate according to Claim 11, **characterized in that** the metal belonging to Group IIIA is aluminium or boron.

13. A lithographic plate according to Claim 11, **characterized in that** the metal belonging to the transition group is titanium(IV), iron(II) and (III), copper(II), chromium(III), cobalt(II), manganese(II), tungsten(IV), vanadium, zirconium or zinc.

14. A lithographic plate according to any of the preceding claims 11 to 14, **characterized in that** the said organometallic compound comprises at least 1 organic moiety selected from the group comprising aliphatic groups having from 1 to 10 C atoms and cycloaliphatic groups having from 3 to 6 C atoms.

15. A lithographic plate according to Claim 14, **characterized in that** the said aliphatic group is an alkyl, alkoxyl or alkylcarboxyl group having from 1 to 10 C atoms.

16. A lithographic plate according to any of the preceding claims 11 to 15, **characterized in that** the organic compound of titanium(IV) is selected from the group comprising titanium(IV) isopropoxide, titanium(IV) propoxide, titanium(IV) butoxide, titanium(IV) ethoxide, titanium(IV) 2-ethylhexoxide, titanium(IV) methoxide, titamium diisopropoxide bis(acetylacetonato) and titanium(IV) (triethanolaminato).

17. A lithographic plate according to any of the preceding claims 11 to 17, **characterized in that** the organic complex of an inorganic salt of titanium(IV) is the complex of titanium tetrachloride with tetrahydrofuran or tetrachlorobis (tetrahydrofuran) titanium.

18. A lithographic plate according to any of the preceding claims 11 to 15, **characterized in that** the organic compounds of copper are selected from the group comprising copper(II) d-gluconate, copper(II) acetate monohydrate, copper(II) acetate hydrate, copper(II) acetylacetonate, copper(II) 2-ethylhexanoate, copper(II) cyclohexanebutyrate, 2,4 pentanedione copper(II) derivates, copper(II) acetate and copper(II) methoxide.

19. A lithographic plate according to any of the preceding claims 11 to 15, **characterized in that** the organic compounds of iron are selected from the group comprising iron(II) d-gluconate dihydrate, iron(III) acetylacetonate, 2,4 pentanedione iron(III) derivatives and iron(II) acetate.

20. A lithographic plate according to any of the preceding claims 11 to 15, **characterized in that** the organic compounds of zinc are selected from the group comprising zinc acetylacetonate, zinc acetylacetonate hydrate, zinc acetate, zinc acetate dihydrate, diethylzinc, dimethyl zinc, diphenyl zinc, dichloro-(N,N,N',N')-tetramethylene-diamino zinc, zinc bis (2,2,6,6-tetramethyl-3,5-heptanedionate), zinc cyclohexanebutyrate and 3,5-di-tert-butylsalicylic acid zinc salt.

21. A lithographic plate according to any of the preceding claims 11 to 15, **characterized in that** the organic compounds of aluminium are selected from the group comprising aluminium acetate, aluminium acetilacetonate, aluminium isopropoxide, aluminium tri-sec-butoxide, diethyl aluminium chloride, diethyl aluminium ethoxide, diisobutyl aluminium hydride and triisobutyl aluminium.

22. A lithographic plate according to any of the preceding claims 11 to 15, **characterized in that** the organic compounds of boron are selected from the group comprising triisopropyl borate, tributyl borate, triethyl borane, triethyl borate, bromodimetyl borane, triphenyl borane, B-methoxy diisopino camphenyl borane, DIP-chloride, B-chloro diisopino camphenyl borane, B-bromocathecol borane, 2-bromo-1,3,2-benzodioxaborole and bromo dimethyl borane.

23. A lithographic plate according to any of the preceding claims 11 to 15, **characterized in that** the organic compounds of manganese are selected from the group comprising manganese acetate, manganese acetate dihydrate, manganese acetate tetra hydrate, manganese acetylacetonate and manganese cyclohexanebutyrate.

24. A lithographic plate according to any of the preceding claims 11 to 15, **characterized in that** the organic compounds of zirconium are selected from the group comprising zirconium(IV) butoxide, zirconium ethoxide, zirconium propoxide, zirconium(IV) isopropoxide isopropanol complex, zirconium acetate, zirconium acetate hydroxyde, zirconium(IV) acetylacetonate and 2,4 pentanedione zirconium(IV) derivatives.

25. A lithographic plate according to any of the preceding claims 11 to 15, **characterized in that** the organic compounds of vanadium are selected from the group comprising vanadyl isopropoxide, vanadyl acetylacetonate and vanadium(III) acetylacetonate.

26. A lithographic plate according to any one of Claims 11 to 25, **characterized in that** the said polymeric binder comprises a novolac resin.

27. A lithographic plate according to any one of Claims 11 to 26, **characterized in that** it further comprises an IR absorber capable of absorbing IR radiation of from 780 to 1400 nm.

28. A lithographic plate according to any one of Claims 11 to 27, **characterized in that** in comprises also a solubility inhibitor which is a hydroxylated acrylic copolymer or a derivative thereof wherein some hydroxyl groups have been esterified with a carboxylic acid or a reactive derivative thereof.

29. A lithographic plate of the positive type coated with a heat-sensitive composition comprising a polymeric binder and a solubility inhibitor, **characterized in that** the said solubility inhibitor is a organometallic compound, an organic salt or an organic complex of an inorganic salt of a metal of the group IIIA or a metal of the transition group of the periodic chart of the elements selected from the group consisting of titanium IV, chromium, cobalt, manganese, tungsten (IV), vanadium, zirconium or zinc provided however that the solubility inhibitor is not a mettallocene and that the composition does not comprise a compound capable of generating an acid on exposure of actinic light.

30. A lithographic plate according to Claim 29, **characterized in that** the metal belonging to Group IIIA is aluminium or boron.

31. A lithographic plate according to claims 29, **characterized in that** the said organometallic compound comprises at least 1 organic moiety selected from the group comprising aliphatic groups having from 1 to 10 C atoms and cycloaliphatic groups having from 3 to 6 C atoms.

32. A lithographic plate according to claim 31, **characterized in that** the said aliphatic group is an alkyl, alkoxyl or alkylcarboxyl group having from 1 to 10 C atoms.

33. A lithographic plate according to claims 29, 31 or 32, **characterized in that** the organic compound of titanium(IV) is selected from the group comprising titanium(IV) isopropoxide, titanium(IV) propoxide, titanium(lV) butoxide, titanium(IV) ethoxide, titanium(IV) 2-ethylhexoxide, titanium(IV) methoxide, titamium diisopropoxide bis(acetylacetonato) and titanium(IV) (triethanolaminato).

34. A lithographic plate according to any of the preceding claims 29, 31 and 32, **characterized in that** the organic complex of an inorganic salt of titanium(IV) is the complex of titanium tetrachloride with tetrahydrofuran or tetrachlorobis (tetrahydrofuran) titanium.

35. A lithographic plate according to any of the preceding claims 29, 31 and 32, **characterized in that** the organic compounds of zinc are selected from the group comprising zinc acetylacetonate, zinc acetylacetonate hydrate, zinc acetate, zinc acetate dihydrate, diethylzinc, dimethyl zinc, diphenyl zinc, dichloro-(N,N,N',N')-tetramethylene-diamino zinc, zinc bis (2,2,6,6-tetramethyl-3,5-heptanedionate), zinc cyclohexanebutyrate and 3,5-di-tert-butylsalicylic acid zinc salt.

36. A lithographic plate according to any of the preceding claims 29 to 32, **characterized in that** the organic compounds of aluminium are selected from the group comprising aluminium acetate, aluminium acetilacetonate, aluminium isopropoxide, aluminium tri-sec-butoxide, diethyl aluminium chloride, diethyl aluminium ethoxide, diisobutyl aluminium hydride and triisobutyl aluminium.

37. A lithographic plate according to any of the preceding claims 29 to 32, **characterized in that** the organic compounds of boron are selected from the group comprising triisopropyl borate, tributyl borate, triethyl borane, triethyl borate, bromodimetyl borane, triphenyl borane, B-methoxy diisopino camphenyl borane, DIP-chloride, B-chloro diisopino camphenyl borane, B-bromocathecol borane, 2-bromo-1,3,2-benzodioxaborole and bromo dimethyl borane.

38. A lithographic plate according to any of the preceding claims 29, 31 and 32, **characterized in that** the organic compounds of manganese are selected from the group comprising manganese acetate, manganese acetate dihydrate, manganese acetate tetra hydrate, manganese acetylacetonate and manganese cyclohexanebutyrate.

39. A lithographic plate according to any of the preceding claims 29, 31 and 32, **characterized in that** the organic compounds of zirconium are selected from the group comprising zirconium(IV) butoxide, zirconium ethoxide, zirconium propoxide, zirconium(IV) isopropoxide isopropanol complex, zirconium acetate, zirconium acetate hydroxyde, zirconium(IV) acetylacetonate and 2,4 pentanedione zirconium(IV) derivatives.

40. A lithographic plate according to any of the preceding claims 29, 31 and 32, **characterized in that** the organic compounds of vanadium are selected from the group comprising vanadyl isopropoxide, vanadyl acetylacetonate and vanadium(III) acetylacetonate.

41. A lithographic plate according to Claim 29, **characterized in that** the said polymeric binder comprises a novolac resin.

42. A lithographic plate according to Claim 29, **characterized in that** it further comprises an IR absorber capable of absorbing IR radiation of from 780 to 1400 nm.

43. A lithographic plate according to Claim 29, **characterized in that** in comprises also a solubility inhibitor which is a hydroxylated acrylic copolymer or a derivative thereof wherein some hydroxyl groups have been esterified with a carboxylic acid or a reactive derivative thereof.

## Patentansprüche

1. Laserempfindliche Zusammensetzung vom Positivtyp, die ein polymeres Bindemittel, einen IR-Absorber und einen Löslichkeitsinhibitor, der in der Lage ist, die Zusammensetzung vor der Belichtung mit IR-Strahlung in einem alkalischen Entwicklerbad unlöslich zu machen, und nach Belichtung mit IR-Strahlung in dem alkalischen Entwicklerbad löslich zu machen, umfasst, **dadurch gekennzeichnet, dass** der Löslichkeitsinhibitor eine Organometallverbindung, ein organisches Salz oder ein organischer Komplex eines anorganischen Salzes eines Metalls, ausgewählt aus Bor, Titan(IV), Wolfram(IV) und Vanadium, ist, mit der Massgabe, dass der Löslichkeitsinhibitor jedoch kein Metallocen ist.

2. Zusammensetzung gemäss Anspruch 1, **dadurch gekennzeichnet, dass** die Organometallverbindung mindestens eine organische Gruppe, ausgewählt aus aliphatischen C₁₋₁₀-Gruppen und cycloaliphatischen C₃₋₆-Gruppen, umfasst.

3. Zusammensetzung gemäss Anspruch 2, **dadurch gekennzeichnet, dass** die aliphatische Gruppe eine Alkyl-, Alkoxyl- oder Alkylcarboxylgruppe mit 1-10 Kohlenstoffatomen ist,

4. Zusammensetzung gemäss mindestens einem der Ansprüche 1 bis 3, **dadurch gekennzeichnet, dass** die organische Titan(IV)-Verbindung ausgewählt ist aus Titan(IV)isopropoxid, Titan(IV)propoxid, Titan(IV)butoxid, Titan(IV)ethoxid, Titan(IV)-2-ethylhexoxid, Titan(IV)methoxid, Titandiisopropoxidbis(acetylacetonat) und Titan(IV)(triethanolaminat).

5. Zusammensetzung gemäss mindestens einem der Ansprüche 1 bis 4, **dadurch gekennzeichnet, dass** der organische Komplex eines anorganischen Titan(IV)salzes ein Komplex von Titantetrachlorid mit Tetrahydrofuran oder Tetrachlorbis(tetrahydrofuran)titan ist.

6. Zusammensetzung gemäss mindestens einem der Ansprüche 1 bis 3, **dadurch gekennzeichnet, dass** die organischen Borverbindungen ausgewählt sind aus Triisopropylborat, Tributylborat, Triethylboran, Triethylborat, Bromdimethylboran, Triphenylboran, B-Methoxydiisopinocamphenylboran, DIP-Chlorid, B-Chlordiisopinocamphenylboran, B-Bromcatecholboran, 2-Brom-1,3,2-benzodioxaborol und Bromdimethylboran.

7. Zusammensetzung gemäss mindestens einem der Ansprüche 1 bis 3, **dadurch gekennzeichnet, dass** die organischen Vanadiumverbindungen ausgewählt sind aus Vanadylisopropoxid, Vanadylacetylacetonat und Vanadium(III)acetalacetonat.

8. Zusammensetzung gemäss mindestens einem der Ansprüche 1 bis 7, **dadurch gekennzeichnet, dass** das polymere Bindemittel ein Novolakharz umfasst.

9. Zusammensetzung gemäss mindestens einem der Ansprüche 1 bis 8, **dadurch gekennzeichnet, dass** der IR-Absorber in der Lage ist, IR-Strahlung von 780-1.400 nm zu absorbieren.

10. Zusammensetzung gemäss mindestens einem der Ansprüche 1 bis 9, **dadurch gekennzeichnet, dass** sie ferner einen Löslichkeitsinhibitor umfasst, der ein hydroxyliertes Acryl-Copolymer oder ein Derivat davon ist, worin einige Hydroxylgruppen mit einer Carbonsäure oder einem reaktiven Derivat davon verestert sind.

11. Lithografiedruckplatte vom Positivtyp, die mit einer wärmeempfindlichen Zusammensetzung beschichtet ist, die ein polymeres Bindemittel und einen Löslichkeitsinhibitor umfasst, **dadurch gekennzeichnet, dass** der Löslichkeitsinhibitor eine Organometallverbindung, ein organisches Salz oder ein organischer Komplex eines anorganischen Salzes eines Metalls der Gruppe IIIA oder der Übergangsgruppe des Periodensystems der Elemente ist, mit der Massgabe, dass der Löslichkeitsinhibitor jedoch kein Metallocen ist, und die Zusammensetzung keine Verbindung umfasst, die in der Lage ist, durch Belichtung mit energiereichem Licht eine Säure zu erzeugen.

12. Lithografiedruckplatte gemäss Anspruch 11, **dadurch gekennzeichnet, dass** das zur Gruppe IIIA gehörende Metall Aluminium oder Bor ist.

13. Lithografiedruckplatte gemäss Anspruch 11, **dadurch gekennzeichnet, dass** das zur Übergangsgruppe gehörende Metall Titan(IV), Eisen(II) und (III), Kupfer(II), Chrom(III), Kobalt(II), Mangan(II), Wolfram(IV), Vanadium, Zirkon oder Zink ist.

14. Lithografiedruckplatte gemäss mindestens einem der vorhergehenden Ansprüche 11 bis 13, **dadurch gekennzeichnet, dass** die Organometallverbindung mindestens eine organische Gruppe, ausgewählt aus aliphatischen C₁₋₁₀-Gruppen und cycloaliphatischen C₃₋₆-Gruppen, umfasst.

15. Lithografiedruckplatte gemäss Anspruch 14, **dadurch gekennzeichnet, dass** die aliphatische Gruppe eine Alkyl-, Alkoxyl- oder Alkylcarboxylgruppe mit 1-10 Kohlenstoffatomen ist.

16. Lithografiedruckplatte gemäss mindestens einem der vorhergehenden Ansprüche 11 bis 15, **dadurch gekennzeichnet, dass** die organische Titan(IV)-Verbindung ausgewählt ist aus Titan(IV)isopropoxid, Titan(IV)propoxid, Titan(IV)butoxid, Titan(IV)ethoxid, Titan(IV)-2-ethylhexoxid, Titan(IV)methoxid, Titandiisopropoxidbis(acetylacetonat) und Titan(IV)(triethanolaminat).

17. Lithografiedruckplatte gemäss mindestens einem der vorhergehenden Ansprüche 11 bis 16, **dadurch gekennzeichnet, dass** der organische Komplex eines anorganischen Titan(IV)salzes ein Komplex aus Titantetrachlorid mit Tetrahydrofuran oder Tetrachlorbis(tetrahydrofuran)titan ist.

18. Lithografiedruckplatte gemäss mindestens einem der vorhergehenden Ansprüche 11 bis 15, **dadurch gekennzeichnet, dass** die organischen Kupferverbindungen ausgewählt sind aus Kupfer(II)-dgluconat, Kupfer(II)acetatmonohydrat, Kupfer(II)acetathydrat, Kupfer(II)acetylacetonat, Kupfer(II)-2-ethylhexanoat, Kupfer(II)cyclohexanbutyrat, 2,4-Pentandionkupfer(II)-Derivaten, Kupfer(II)acetat und Kupfer(II)methoxid.

19. Lithografiedruckplatte gemäss mindestens einem der vorhergehenden Ansprüche 11 bis 15, **dadurch gekennzeichnet, dass** die organischen Eisenverbindungen ausgewählt sind aus Eisen(II)-dgluconatdihydrat, Eisen(III)acetylacetonat, 2,4-Pentandioneisen(III)-Derivaten und Eisen(II)acetat.

20. Lithografiedruckplatte gemäss mindestens einem der vorhergehenden Ansprüche 11 bis 15, **dadurch gekennzeichnet, dass** die organischen Zinkverbindungen ausgewählt sind aus Zinkacetylacetonat, Zinkacetylacetonathydrat, Zinkacetat, Zinkacetatdihydrat, Diethylzink, Dimethylzink, Diphenylzink, Dichlor-(N,N,N',N')-tetramethylendiaminozink, Zinkbis(2,2,6,6-tetramethyl-3,5-heptandionat), Zinkcyclohexanbutyrat und 3,5-Di-tertbutylsalicylsäure-Zinksalz.

21. Lithografiedruckplatte gemäss mindestens einem der vorhergehenden Ansprüche 11 bis 15, **dadurch gekennzeichnet, dass** die organischen Aluminiumverbindungen ausgewählt sind aus Aluminiumacetat, Aluminiumacetylacetonat, Aluminiumisopropoxid, Aluminiumtri-sec-butoxid, Diethylaluminiumchlorid, Diethylaluminiumethoxid, Diisobutylaluminiumhydrid und Triisobutylaluminium.

22. Lithografiedruckplatte gemäss mindestens einem der vorhergehenden Ansprüche 11 bis 15, **dadurch gekennzeichnet, dass** die organischen Borverbindungen ausgewählt sind aus Triisopropylborat, Tributylborat, Triethylboran, Triethylborat, Bromdimethylboran, Triphenylboran, B-Methoxydiisopinocamphenylboran, DIP-Chlorid, B-Chlordiisopinocamphenylboran, B-Bromcatecholboran, 2-Brom-1,3,2-benzodioxaborat und Bromdimethylboran.

23. Lithografiedruckplatte gemäss mindestens einem der vorhergehenden Ansprüche 11 bis 15, **dadurch gekennzeichnet, dass** die organischen Manganverbindungen ausgewählt sind aus Manganacetat, Manganacetatdihydrat, Manganacetattetrahydrat, Manganacetylacetonat und Mangancyclohexanbutyrat.

24. Lithografiedruckplatte gemäss mindestens einem der vorhergehenden Ansprüche 11 bis 15, **dadurch gekennzeichnet, dass** die organischen Zirkonverbindungen ausgewählt sind aus Zirkon(IV)butoxid, Zirkonethoxid, Zirkonpropoxid, Zirkon(IV)isopropoxid-Isopropanol-Komplex, Zirkonacetat, Zirkonacetathydroxid, Zirkon(IV)acetylacetonat und 2,4-Pentandionzirkon(IV)-Derivaten.

25. Lithografiedruckplatte gemäss mindestens einem der vorhergehenden Ansprüche 11 bis 15, **dadurch gekennzeichnet, dass** die organischen Vanadiumverbindungen ausgewählt sind aus Vanadylisopropoxid, Vanadylacetylacetonat und Vanadium(III)acetylacetonat.

26. Lithografiedruckplatte gemäss mindestens einem der Ansprüche 11 bis 25, **dadurch gekennzeichnet, dass** das polymere Bindemittel ein Novolakharz umfasst.

27. Lithografiedruckplatte gemäss mindestens einem der Ansprüche 1 bis 26, **dadurch gekennzeichnet, dass** sie ferner einen IR-Absorber umfasst, der in der Lage ist, IR-Strahlung von 780-1.400 nm zu absorbieren.

28. Lithografiedruckplatte gemäss mindestens einem der Ansprüche 11 bis 27, **dadurch gekennzeichnet, dass** sie ferner einen Löslichkeitsinhibitor umfasst, der ein hydroxyliertes Acryl-Copolymer oder ein Derivat davon ist, worin einige Hydroxylgruppen mit einer Carbonsäure oder einem reaktiven Derivat davon verestert wurden.

29. Lithografiedruckplatte vom Positivtyp, die beschichtet ist mit einer wärmeempfindlichen Zusammensetzung, die ein polymeres Bindemittel und einen Löslichkeitsinhibitor umfasst, **dadurch gekennzeichnet, dass** der Löslichkeitsinhibitor eine Organometallverbindung, ein organisches Salz oder ein organischer Komplex eines anorganischen Salzes eines Metalls der Gruppe IIIA oder eines Metalls der Übergangsgruppe des Periodensystems der Elemente, ausgewählt aus Titan(IV), Chrom, Kobalt, Mangan, Wolfram(IV), Vanadium, Zirkon oder Zink, ist, mit der Massgabe, dass der Löslichkeitsinhibitor jedoch kein Metallocen ist, und dass die Zusammensetzung keine Verbindung umfasst, die in der Lage ist, durch Bestrahlung mit energiereichem Licht eine Säure zu erzeugen.

30. Lithografiedruckplatte gemäss Anspruch 29, **dadurch gekennzeichnet, dass** das zur Gruppe IIIA gehörende Metall Aluminium oder Bor ist.

31. Lithografiedruckplatte gemäss Anspruch 29, **dadurch gekennzeichnet, dass** die Organometallverbindung mindestens eine organische Gruppe umfasst, ausgewählt aus aliphatischen C₁₋₁₀-Gruppen und cycloaliphatischen C₃₋₆-Gruppen.

32. Lithografiedruckplatte gemäss Anspruch 31, **dadurch gekennzeichnet, dass** die aliphatische Gruppe eine Alkyl-, Alkoxyl- oder Alkylcarboxylgruppe mit 1-10 Kohlenstoffatomen ist.

33. Lithografiedruckplatte gemäss mindestens einem der Ansprüche 29, 31 oder 32, **dadurch gekennzeichnet, dass** die organische Titan(IV)-Verbindung ausgewählt ist aus Titan(IV)isopropoxid, Titan(IV)propoxid, Titan(IV)butoxid, Titan(IV)ethoxid, Titan(IV)-2-ethylhexoxid, Titan(IV)methoxid, Titandiisopropoxidbis(acetylacetonat) und Titan(IV)(triethanolaminat).

34. Lithografiedruckplatte gemäss mindestens einem der Ansprüche 29, 31 oder 32, **dadurch gekennzeichnet, dass** der organische Komplex eines anorganischen Titan(IV)salzes der Komplex von Titantetrachlorid mit Tetrahydrofuran oder Tetrachlorbis(tetrahydrofuran)titan ist.

35. Lithografiedruckplatte gemäss mindestens einem der Ansprüche 29, 31 oder 32, **dadurch gekennzeichnet, dass** die organischen Zinkverbindungen ausgewählt sind aus Zinkacetylacetonat, Zinkacetylacetonathydrat, Zinkacetat, Zinkacetatdihydrat, Diethylzink, Dimethylzink, Diphenylzink, Dichlor-(N,N,N',N')-tetramethylen-diaminozink, Zinkbis(2,2,6,6-tetramethyl-3,5-heptandionat), Zinkcyclohexanbutyrat und 3,5-Di-tert-butylsalicylsäure-Zinksalz.

36. Lithografiedruckplatte gemäss mindestens einem der Ansprüche 29 bis 32, **dadurch gekennzeichnet, dass** die organischen Aluminiumverbindungen ausgewählt sind aus Aluminiumacetat, Aluminiumacetylacetonat, Aluminiumisopropoxid, Aluminiumtri-sec-butoxid, Diethylaluminiumchlorid, Diethylaluminiumethoxid, Diisobutylaluminiumhydrid und Triisobutylaluminium.

37. Lithografiedruckplatte gemäss mindestens einem der Ansprüche 29 bis 32, **dadurch gekennzeichnet, dass** die organischen Borverbindungen ausgewählt sind aus Triisopropylborat, Tributylborat, Triethylboran, Triethylborat, Bromdimethylboran, Triphenylboran, B-Methoxydiisopinocamphenylboran, DIP-Chlorid, B-Chlordiisopinocamphenylboran, B-Bromcatecholboran, 2-Brom-1,3,2-benzodioxaborol und Bromdimethylboran.

38. Lithografiedruckplatte gemäss mindestens einem der Ansprüche 29, 31 und 32, **dadurch gekennzeichnet, dass** die organischen Manganverbindungen ausgewählt sind aus Manganacetat, Manganacetatdihydrat, Manganacetattetrahydrat, Manganacetylacetonat und Mangancyclohexanbutyrat.

39. Lithografiedruckplatte gemäss mindestens einem der Ansprüche 29, 31 und 32, **dadurch gekennzeichnet, dass** die organischen Zirkonverbindungen ausgewählt sind aus Zirkon(IV)butoxid, Zirkonethoxid, Zirkonpropoxid, Zirkon(IV)isopropoxid-Isopropanol-Komplex, Zirkonacetat, Zirkonacetathydroxid, Zirkon(IV)acetylacetonat und 2,4-Pentandionzirkon(IV)-Derivaten.

40. Lithografiedruckplatte gemäss mindestens einem der Ansprüche 29, 31 und 32, **dadurch gekennzeichnet, dass** die organischen Vanadiumverbindungen ausgewählt sind aus Vanadylisopropoxid, Vanadylacetylacetonat und Vanadium(III)acetylacetonat.

41. Lithografiedruckplatte gemäss Anspruch 29, **dadurch gekennzeichnet, dass** das polymere Bindemittel ein Novolakharz umfasst.

42. Lithografiedruckplatte gemäss Anspruch 29, **dadurch gekennzeichnet, dass** sie ferner einen IR-Absorber umfasst, der in der Lage ist, IR-Strahlung von 780-1.400 nm zu absorbieren.

43. Lithografiedruckplatte gemäss Anspruch 29, **dadurch gekennzeichnet, dass** sie ferner einen Löslichkeitsinhibitor umfasst, der ein hydroxyliertes Acryl-Copolymer oder ein Derivat davon ist, worin einige Hydroxylgruppen mit einer Carbonsäure oder einem reaktiven Derivat davon verestert wurden.

## Revendications

1. Composition sensible au laser de type positif comprenant un liant polymère, un absorbeur d'IR et un inhibiteur de solubilité capable de rendre la composition insoluble dans un bain développant l'alcalinité avant l'exposition aux rayons IR et soluble dans ledit bain développant l'alcalinité après l'exposition aux rayons IR, **caractérisée en ce que** ledit inhibiteur de solubilité est un composé organométallique, un sel organique ou un complexe organique d'un sel inorganique d'un métal sélectionné parmi le groupe constitué du bore, du titane (IV), du tungstène (IV) et du vanadium, à la condition, toutefois, que ledit inhibiteur de solubilité ne soit pas un métallocène.

2. Composition selon la revendication 1, **caractérisée en ce que** ledit composé organométallique comprend au moins 1 groupe fonctionnel organique sélectionné parmi le groupe comprenant des groupes aliphatiques ayant de 1 à 10 atomes de carbone et des groupes cycloaliphatiques ayant de 3 à 6 atomes de carbone.

3. Composition selon la revendication 2, **caractérisée en ce que** ledit groupe aliphatique est un groupe alkyle, alcoxyle ou alkylcarboxyle ayant de 1 à 10 atomes de carbone.

4. Composition selon l'une quelconque des revendications 1 à 3 précédentes, **caractérisée en ce que** le composé organique de titane (IV) est sélectionné parmi le groupe comprenant de l'isopropoxyde de titane (IV), du propoxyde de titane (IV), du butoxyde de titane (IV), de l'éthoxyde de titane (IV), du 2-éthylhexoxyde de titane (IV), du méthoxyde de titane (IV), du diisopropoxyde de titane bis(acétylacétonato) et du titane (IV) (triéthanolaminato).

5. Composition selon l'une quelconque des revendications 1 à 4 précédentes, **caractérisée en ce que** le complexe organique d'un sel inorganique de titane (IV) est le complexe de tétrachlorure de titane avec du tétrahydrofurane ou du tétrachlorobis (tétrahydrofurane) titane.

6. Composition selon l'une quelconque des revendications 1 à 3 précédentes, **caractérisée en ce que** les composés organiques de bore sont sélectionnés parmi le groupe comprenant le borate de triisopropyle, le borate de tributyle, le borane de triéthyle, le borate de triéthyle, le borane de bromodiméthyle, le borane de triphényle, le borane de B-méthoxy diisopino camphényle, le chlorure de DIP, le borane de B-chloro diisopino camphényle, le borane de B-bromocathécol, le 2-bromo-1,3,2-benzodioxaborole et le borane de bromo diméthyle.

7. Composition selon l'une quelconque des revendications 1 à 3 précédentes, **caractérisée en ce que** les composés organiques de vanadium sont sélectionnés parmi le groupe comprenant l'isopropoxyde de vanadyle, l'acétylacétonate de vanadyle et l'acétylacétonate de vanadium (III).

8. Composition selon l'une quelconque des revendications 1 à 7 précédentes, **caractérisée en ce que** ledit liant polymère comprend une résine novolaque.

9. Composition selon l'une quelconque des revendications 1 à 8 précédentes, **caractérisée en ce que** l'absorbeur d'IR est capable d'absorber des rayons IR de 780 à 1.400 nm.

10. Composition selon l'une quelconque des revendications 1 à 9 précédentes, **caractérisée en ce qu'**elle comprend également un inhibiteur de solubilité qui est un copolymère acrylique hydroxylé, ou un dérivé de celui-ci,dans lequel certains groupes hydroxyle ont été estérifiés avec un acide carboxylique ou un dérivé réactif de celui-ci.

11. Plaque lithographique de type positif revêtue d'une composition thermosensible comprenant un liant polymère et un inhibiteur de solubilité, **caractérisée en ce que** ledit inhibiteur de solubilité est un composé organométallique, un sel organique ou un complexe organique d'un sel inorganique d'un métal du groupe IIIA ou du groupe de transition du tableau périodique des éléments, à la condition, toutefois, que l'inhibiteur de solubilité ne soit pas un métallocène et que la composition ne comprenne pas un composé capable de produire un acide lors de l'exposition à la lumière actinique.

12. Plaque lithographique selon la revendication 11, **caractérisée en ce que** le métal appartenant au groupe IIIA est l'aluminium ou le bore.

13. Plaque lithographique selon la revendication 11, **caractérisée en ce que** le métal appartenant au groupe de transition est le titane (IV), le fer (II) et (III), le cuivre (II), le chrome (III), le cobalt (II), le manganèse (II), le tungstène (IV), le vanadium, le zirconium ou le zinc.

14. Plaque lithographique selon l'une quelconque des revendications 11 à 14, **caractérisée en ce que** ledit composé organométallique comprend au moins 1 groupe fonctionnel organique sélectionné parmi le groupe comprenant des groupes aliphatiques ayant de 1 à 10 atomes de carbone et des groupes cycloaliphatiques ayant de 3 à 6 atomes de carbone.

15. Plaque lithographique selon la revendication 14, **caractérisée en ce que** ledit groupe aliphatique est un groupe alkyle, alcoxyle ou alkylcarboxyle ayant de 1 à 10 atomes de carbone.

16. Plaque lithographique selon l'une quelconque des revendications 11 à 15, **caractérisée** en que le composé organique de titane (IV) est sélectionné parmi le groupe comprenant l'isopropoxyde de titane (IV), le propoxyde de titane (IV), le butoxyde de titane (IV), l'éthoxyde de titane (IV), le 2-éthylhexoxyde de titane (IV), le méthoxyde de titane (IV), le diisopropoxyde de titane bis(acétylacétonato) et le titane (IV) (triéthanolaminato).

17. Plaque lithographique selon l'une quelconque des revendications 11 à 17, **caractérisée** en que le complexe organique d'un sel inorganique de titane (IV) est le complexe de tétrachlorure de titane avec du tétrahydrofurane ou du tétrachlorobis (tétrahydrofurane)titane.

18. Plaque lithographique selon l'une quelconque des revendications 11 à 15, **caractérisée** en que les composés organiques de cuivre sont sélectionnés parmi le groupe comprenant le d-gluconate de cuivre (II), le monohydrate d'acétate de cuivre (II), l'hydrate d'acétate de cuivre (II), l'acétylacétonate de cuivre (II), le 2-éthylhexanoate de cuivre (II), le cyclohexanebutyrate de cuivre (II), les dérivés cupriques (II) de 2,4-pentanedione, l'acétate de cuivre (II) et le méthoxyde de cuivre (II).

19. Plaque lithographique selon l'une quelconque des revendications 11 à 15, **caractérisée** en que les composés organiques de fer sont sélectionnés parmi le groupe comprenant le dihydrate de d-gluconate de fer (II), l'acétylacétonate de fer (III), les dérivés de fer (III) de 2,4-pentanedione et l'acétate de fer (III).

20. Plaque lithographique selon l'une quelconque des revendications 11 à 15, **caractérisée** en que les composés organiques de zinc sont sélectionnés parmi le groupe comprenant l'acétylacétonate de zinc, l'hydrate d'acétylacétonate de zinc, l'acétate de zinc, le dihydrate d'acétate de zinc, le diéthylzinc, le diméthyle zinc, le diphényle zinc, le dichloro-(N,N,N',N')-tétraméthylène-diamino zinc, le bis(2,2,6,6-tétraméthyl-3,5-heptanedionate) de zinc, le cyclohexanebutyrate de zinc et le sel de zinc d'acide 3,5-di-tert-butylsalicylique.

21. Plaque lithographique selon l'une quelconque des revendications 11 à 15, **caractérisée** en que les composés organiques d'aluminium sont sélectionnés parmi le groupe comprenant l'acétate d'aluminium, l'acétylacétonate d'aluminium, l'isopropoxyde d'aluminium, le tri-sec-butoxyde d'aluminium, le chlorure de diéthyle aluminium, l'éthoxyde de diéthyle aluminium, l'hydrure de diisobutyle aluminium et le triisobutyle aluminium.

22. Plaque lithographique selon l'une quelconque des revendications 11 à 15, **caractérisée** en que les composés organiques de bore sont sélectionnés parmi le groupe comprenant le borate de triisopropyle, le borate de tributyle, le borane de triéthyle, le borate de triéthyle, le borane de bromodiméthyle, le borane de triphényle, le borane de B-méthoxy diisopino camphényle, le chlorure de DIP, le borane de B-chloro diisopino camphényle, le borane de B-bromocathécol, le 2-bromo-1,3,2-benzodioxaborole et le borane de bromo diméthyle.

23. Plaque lithographique selon l'une quelconque des revendications 11 à 15, **caractérisée** en que les composés organiques de manganèse sont sélectionnés parmi le groupe comprenant l'acétate de manganèse, le dihydrate d'acétate de manganèse, le tétrahydrate d'acétate de manganèse, l'acétylacétonate de manganèse et le cyclohexanebutyrate de manganèse.

24. Plaque lithographique selon l'une quelconque des revendications 11 à 15, **caractérisée** en que les composés organiques de zirconium sont sélectionnés parmi le groupe comprenant le butoxyde de zirconium (IV), l'éthoxyde de zirconium, le propoxyde de zirconium, le complexe d'isopropoxyde de zirconium (IV) isopropanol, l'acétate de zirconium, l'hydroxyde d'acétate de zirconium, l'acétylacétonate de zirconium (IV) et les dérivés de zirconium (IV) de 2,4-pentanedione.

25. Plaque lithographique selon l'une quelconque des revendications 11 à 15, **caractérisée** en que les composés organiques de vanadium sont sélectionnés parmi le groupe comprenant l'isopropoxyde de vanadyle, l'acétylacétonate de vanadyle et l'acétylacétonate de vanadium (III).

26. Plaque lithographique selon l'une quelconque des revendications 11 à 25, **caractérisée** en que ledit liant polymère comprend une résine de novolaque.

27. Plaque lithographique selon l'une quelconque des revendications 11 à 26, **caractérisée** en qu'elle comprend en outre un absorbeur d'IR capable d'absorber des rayons IR de 780 à 1.400 nm.

28. Plaque lithographique selon l'une quelconque des revendications 11 à 27, **caractérisée** en qu'elle comprend également un inhibiteur de solubilité qui est un copolymère acrylique hydroxylé, ou un dérivé de celui-ci, dans lequel certains groupes hydroxyle ont été estérifiés avec un acide carboxylique ou un dérivé réactif de celui-ci.

29. Plaque lithographique de type positif revêtue d'une composition thermosensible comprenant un liant polymère et un inhibiteur de solubilité, **caractérisée** en que ledit inhibiteur de solubilité est un composé organométallique, un sel organique ou un complexe organique d'un sel inorganique d'un métal du groupe IIIA ou d'un métal du groupe de transition du tableau périodique des éléments, sélectionné parmi le groupe constitué du titane (IV), du chrome, du cobalt, du manganèse, du tungstène (IV), du vanadium, du zirconium ou du zinc, à la condition, toutefois, que l'inhibiteur de solubilité ne soit pas un métallocène et que la composition ne comprenne pas un composé capable de produire un acide lors de l'exposition à la lumière actinique.

30. Plaque lithographique selon la revendication 29, **caractérisée en ce que** le métal appartenant au groupe IIIA est l'aluminium ou le bore.

31. Plaque lithographique selon la revendication 29, **caractérisée en ce que** ledit composé organométallique comprend au moins 1 groupe fonctionnel-organique sélectionné parmi le groupe comprenant des groupes aliphatiques ayant de 1 à 10 atomes de carbone et des groupes cycloaliphatiques ayant de 3 à 6 atomes de carbone.

32. Plaque lithographie selon la revendication 31, **caractérisée en ce que** ledit groupe aliphatique est un groupe alkyle, alcoxyle ou alkylcarboxyle ayant de 1 à 10 atomes de carbone.

33. Plaque lithographique selon les revendications 29, 31 ou 32, **caractérisée en ce que** le composé organique de titane (IV) est sélectionné parmi le groupe comprenant l'isopropoxyde de titane (IV), le propoxyde de titane (IV), le butoxyde de titane (IV), l'éthoxyde de titane (IV), le 2-éthylhexoxyde de titane (IV), le méthoxyde de titane (IV), le diisopropoxyde de titane bis(acétylacétonato) et le titane (IV) (triéthanolaminato).

34. Plaque lithographique selon l'une quelconque des revendications 29, 31 ou 32, **caractérisée en ce que** le complexe organique d'un sel inorganique de titane (IV) est le complexe de tétrachlorure de titane avec du tétrahydrofurane ou du tétrachlorobis(tétrahydrofurane)titane.

35. Plaque lithographique selon l'une quelconque des revendications 29, 31 ou 32, **caractérisée en ce que** les composés organiques de zinc sont sélectionnés parmi le groupe comprenant l'acétylacétonate de zinc, l'hydrate d'acétylacétonate de zinc, l'acétate de zinc, le dihydrate d'acétate de zinc, le diéthylzinc, le diméthyle zinc, le diphényle zinc, le dichloro(N,N,N',N')-tétraméthylène-diamino zinc, le bis (2,2,6,6-tétraméthyl-3, 5-heptanedionate) de zinc, le cyclohexanebutyrate de zinc et le sel de zinc d'acide 3,5-di-tert-butylsalicylique.

36. Plaque lithographique selon l'une quelconque des revendications 29 à 32, **caractérisée en ce que** les composés organiques d'aluminium sont sélectionnés parmi le groupe comprenant l'acétate d'aluminium, l'acétylacétonate, l'isopropoxyde d'aluminium, le tri-sec-butoxyde d'aluminium, le chlorure de diéthyle aluminium, l'éthoxyde de diéthyle aluminium, l'hydrure de diisobutyle aluminium et le triisobutyle aluminium.

37. Plaque lithographique selon l'une quelconque des revendications 29 à 32, **caractérisée en ce que** les composés organiques de bore sont sélectionnés parmi le groupe comprenant le borate de triisopropyle, le borate de tributyle, le borane de triéthyle, le borate de triéthyle, le borane de bromodiméthyle, le borane de triphényle, le borane de B-méthoxy diisopino camphényle, le chlorure de DIP, le borane de B-chloro diisopino camphényle, le borane de B-bromocathécol, le 2-bromo-1,3,2-benzodioxaborole et le borane de bromo diméthyle.

38. Plaque lithographique selon l'une quelconque des revendications 29, 31 ou 32, **caractérisée en ce que** les composés organiques de manganèse sont sélectionnés parmi le groupe comprenant l'acétate de manganèse, le dihydrate d'acétate de manganèse, le tétrahydrate d'acétate de manganèse, l'acétylacétonate de manganèse et le cyclohexanebutyrate de manganèse.

39. Plaque lithographique selon l'une quelconque des revendications 29, 31 ou 32, **caractérisée en ce que** les composés organiques de zirconium sont sélectionnés parmi le groupe comprenant le butoxyde de zirconium (IV), l'éthoxyde de zirconium, le propoxyde de zirconium, le complexe d'isopropoxyde de zirconium (IV) isopropanol, l'acétate de zirconium, l'hydroxyde d'acétate de zirconium, l'acétylacétonate de zirconium (IV) et les dérivés de zirconium (IV) de 2,4-pentanedione.

40. Plaque lithographique selon l'une quelconque des revendications 29, 31 ou 32, **caractérisée en ce que** les composés organiques de vanadium sont sélectionnés parmi le groupe comprenant l'isopropoxyde de vanadyle, l'acétylacétonate de vanadyle et l'acétylacétonate de vanadium (III).

41. Plaque lithographique selon la revendication 29, **caractérisée en ce que** ledit liant polymère comprend une résine novolaque.

42. Plaque lithographique selon la revendication 29, **caractérisée en ce qu'**elle comprend en outre un absorbeur d'IR capable d'absorber des rayons IR de 780 à 1.400 nm.

43. Plaque lithographique selon la revendication 29, **caractérisée en ce qu'**elle comprend également un inhibiteur de solubilité qui est un copolymère acrylique hydroxylé, ou un dérivé de celui-ci, dans lequel certains groupes hydroxyle ont été estérifiés avec un acide carboxylique ou un dérivé réactif de celui-ci.
